# EUROPÄISCHE PATENTANMELDUNG

(11) **EP 0 669 161 A2**
(43) Veröffentlichungstag der Anmeldung: **30.08.1995**
(21) Anmeldenummer: 95101651.8
(22) Anmeldetag: 08.02.1995
(51) Int. Cl.: B01J 20/28, F25B 35/04, B01J 20/18

(54) **Adsorptionsmittelbeschichtung auf Metallen und Verfahren zur Herstellung**

(30) Priorität: 23.02.1994 DE 4405669
(71) Anmelder: ZEO-TECH Zeolith Technologie GmbH, D-85716 Unterschleissheim (DE)
(72) Erfinder: Maier-Laxhuber, Dr. Peter, D-85386 Dietersheim (DE); Engelhardt, Herr Reiner, D-80933 München (DE); Mayer, Dipl. Ing. Helmut, D-82205 Gilching (DE); Widemann, Ing. Grad. Fritz, D-81241 München (DE)

(57) **Zusammenfassung**

Adsorptionsmittelbeschichtung auf einer metallischen Fläche mit pulverförmigem, festem Adsorptionsmittel mit einem Korndurchmesser zwischen 1 und 50 um, welches durch feinverteiltes, enthärtetes Bindemittel mit einem Massenanteil von weniger als 50 Prozent, bezogen auf den Pulveranteil, verklebt ist, und bei der die Dicke der Beschichtung weniger als 4 mm beträgt und bei der die Adsorptionsgeschwindigkeitfür Wasserdampf bei einem Dampfdruck von weniger als 20 mbar innerhalb von 30 Minuten zu einer Gewichtszunahme von mindestens 5 % (bezogen auf das Adsorptionsmittel) führt.

## Beschreibung

Die Erfindung betrifft Adsorptionsmittelschichten auf metallischen Oberflächen, wie sie insbesondere für Adsorptionsapparate benutzt werden, und ein Verfahren zur Herstellung der Adsorptionsmittelbeschichtung auf Metallen.

Adsorptionsmittel sind Stoffe, welche ein weiteres, in der Regel leichter flüchtiges Arbeitsmittel auf der Oberfläche oder in ihrer kapillaren Hohlraumstruktur adsorbieren. Dadurch können sie auch zur Wärmetransformation eingesetzt werden. Ausführungsformen solcher Apparaturen finden sich beispielsweise in den Europäischen Patentschriften EP 0 151 237 und EP 0 205 167. Die hier verwandten Adsorptionsmittel adsorbieren unter Wärmefreisetzung ein dampfförmiges Arbeitsmittel auf mittlerem Temperaturniveau. Der Arbeitsmitteldampf wird dabei bei tieferen Temperaturen aus einem Verdampfer angesaugt. Das verdampfende Arbeitsmittel erzeugt im Verdampfer Kälte. In einem folgenden Prozeßschritt wird durch Wärmezufuhr bei höheren Temperaturen das Arbeitsmittel wieder dampfförmig aus dem Adsorptionsmittel ausgetrieben und in einem Kondensator auf mittlerem Temperaturniveau rückverflüssigt.

Um eine schnelle Arbeitsmitteldampfaufnahme bzw. -abgabe zu erreichen, ist eine gute Wärmeleitung im Adsorptionsmittel und ein guter Wärmeübergang zu Wärmetauscheflächen notwendig.

In der Europäischen Patentanschrift EP 0 151 786 ist ein Adsorptionsmittelformling mit hoher Wärmeleitung und ein Verfahren zu seiner Herstellung beschrieben. Das pulverförmige Adsorptionsmittel Zeolith wird dabei mit Bindemittel und Wasser vermischt und im fließfähigen Zustand in Behältnisse, insbesondere Wärmetauscher, gegossen. Nach dem Trocknen und Erstarren der pastösen Mischung ist der gesamte Wärmetauscher durch Zeolith bis auf einige gezielt angebrachte Strömungskanäle ausgekleidet. Von Nachteil ist, daß sich bei häufigen und schnellen Temperaturwechseln der Zeolith-Formling von der Wärmetauscheroberfläche ablöst. Ein schneller Wärmeaustausch zwischen Wärmetauscher und Zeolith ist dann nicht mehr gewährleistet.

Ein weiterer Nachteil der beschriebenen Formkörper liegt darin, daß Zeolith-Strukturen in aller Regel eine schlechte Wärmeleitung aufweisen. Trotz guter Wärmetauschergeometrien liegen die notwendigen Zeiträume für die Aufnahme und die Abgabe von Arbeitsmitteldämpfen im Bereich von mehreren Minuten bis Stunden. Für mobile Anwendungen mit relativ strengen Gewichtslimits sind derartige Formkörper-Strukturen weniger geeignet. Anzustreben ist daher eine Struktur, bei welcher eine sehr rasche Temperaturerhöhung und -absenkung bei einer sehr guten Anbindung des Adsorptionsmittels an den Wärmetauscher möglich ist.

Handelsübliche Zeolithe werden in Pulverform und als Granulat in Kugel- bzw. Zylindergeometrien angeboten. Die Verwendung von pulverförmigen Zeolithen ist in Adsorptionssystemen der oben erwähnten Art nicht möglich, da durch den zu- und abströmenden Arbeitsmitteldampf pulverförmige Bestandteile unkontrolliert abgetragen werden. Die Verwendung von granuliertem Adsorptionsmittel ist zwar möglich, führt aber durch die schlechte Wärmeleitung und die schlechte Wärmekontaktierung zu den beschriebenen Nachteilen.

Sowohl natürliche als auch synthetisch hergestellte Zeolithe vermögen beispielsweise Wasserdämpfe in erheblichem Umfang aufzunehmen und bei höheren Temperaturen wieder abzugeben. Die Aufnahmefähigkeit verschiedener Zeolithe kann über 25 Gewichtsprozent betragen. Die Desorptions-Temperaturen zur vollständigen Abgabe von Wasserdampf müssen zwischen 200 und 300 _{°} C liegen. Bei der Aufnahme von Wasserdampf sollte die Temperatur in aller Regel unter 100 _{°} C liegen. Daraus resultieren sehr hohe Temperaturhübe, welche nur mit großen Wärmetauscherobeflächen und mit dünnen Zeolith-Schichten realisierbar sind.

Da die Desorptions-Temperaturen bei Zeolith oberhalb von 200 _{°} C liegen, ist der Einsatz metallischer Wärmetauscher geboten. Eine haltbare Verbindung von Zeolith auf metallischen Oberflächen ist bisher nicht bekannt. Aufgrund unterschiedlicher Wärmeausdehnungskoeffizienten lösen sich die Beschichtungen ab. Sobald aber Spalten zwischen Adsorptionsmittel und Wärmetauscheroberflächen entstehen, ist eine Wärmeübertragung stark eingeschränkt. Dies hat wiederum längere Zyklenzeiten zur Folge und erfordert größere Adsorptionsmittelmengen für die jeweils vorgesehene Anwendung.

Neben einer guten Kontaktierung muß auch ein ausreichender Zutritt für den Arbeitsmitteldampf gewährleistet sein. Bisher ist es nicht gelungen, Adsorptionsmittelschichten mit gutem Wärmekontakt auf metallischen Oberflächen so zu beschichten, daß der Zutritt von Arbeitsmitteldampf gewährleistet ist und die Adsorptionsfähigkeit nicht beeinträchtigt wird.

Aufgabe der vorliegenden Erfindung ist die Kontaktierung von Adsorptionsmitteln auf metallischen Flächen mit gutem Wärmekontakt und guter Aufnahmefähigkeit für das jeweilige Arbeitsmittel sowie die Beschreibung eines Herstellungsverfahrens. Gelöst wird diese Aufgabe gemäß den Merkmalen der Patentansprüche 1 und 7.

Bei der erfindungsgemäßen Adsorptionsmittelbeschichtung treten zur Überraschung des Fachmanns, die in der Aufgabe geforderten Eigenschaften auf. Bei der Verwendung von pulverförmigem Adsorptionsmittel mit einer Korngröße zwischen 1 und 50 um sowie einem keramischen Bindemittel, dessen Gewichtsanteil unter 50 % der Beschichtungsmasse liegt und deren Schichtdicke weniger als 5 mm beträgt, ergibt sich eine ausreichende mechanische und thermische Stabilität. Die Adsorptionsfähigkeit vom Arbeitsmittel ist kaum eingeschränkt. Innerhalb weniger Minuten ist die maximal mögliche Arbeitsmittelmenge adsorbierbar und die Reaktionswärme ableitbar.

Bei der Verwendung von Zeolith reicht die Temperaturstabilität zwischen - 30 _{°} C und + 300 °C. Als Bindemittel eignen sich insbesondere bekannte Hochtemperaturkleber zum Verkleben von keramischen Produkten und Glasprodukten auf Metallen. Die Verwendung von Hochtemperaturklebern erlaubt den Einsatz auch unter hohen thermischen Belastungen.

Da bei großen Schichtdicken die Diffusionswiderstände für Arbeitsmitteldämpfe sowie die geringe Wärmeleitung im Adsorptionsmittel selbst den positiven Effekt einer guten Wärmekontaktierung aufheben, haben sich Schichtdicken von weniger als 5 mm als vorteilhaft erwiesen.

Die zu beschichtenden Metalle haben vorteilhafterweise vor der Beschichtung eine angeraute, fett- und staubfreie Oberfläche. Geeignet sind alle Metalle mit guter Wärmeleitfähigkeit wie sie heute in Wärmetauschern zur Anwendung kommen. Sehr gute Resultate sind mit Aluminium- und Kupferwerkstoffen erreicht worden.

Erfindungsgemäß lassen sich besonders gute Resultate mit Lamellen-Wärmetauschernerzielen, deren Lamellenabstand weniger als 2 mm beträgt. Vorgefertigte Wärmetauscher lassen sich im Tauchverfahren mit einer oder mehreren Adsorptionsmittelschichten belegen. Die endgültige Schichtdicke wird so gewählt, daß zwischen den beschichteten Lamellen noch genügend Freiraum für den zu- bzw. abströmenden Arbeitsmitteldampf verbleibt. Aufgrund der dünnen Adsorptionsmittelschichten können sehr schnelle Zyklenzeiten erreicht werden. In der Praxis liegen sie unter 2 Minuten.

Gute Resultate wurden auch bei der Beschichtung von Edelstahlfolien erreicht. Dünne Folien werden im Tiefziehverfahren so verformt, daß aus zwei Halbschalen ein in sich geschlossenes Behältnis entsteht. In einem Teil des Behältnisses ist eine Zeolithschicht aufgebracht, während im gegenüberliegenden Behälterteil Raum für die Kondensation bzw. die Verdampfung des Arbeitsmittels gegeben ist. Derartige Behältnisse, auch Speichen genannt, sind beispielsweise in der Europäischen Patentschrift EP 0 151 237 aufgezeigt.

Vorteilhaft ist es auch, die Metalloberfläche vor der Beschichtung mit einer Zwischenschicht aus Glasfaservlies zu versehen. Auf diese Weise sind haltbare Adsorptionsmittelschichten mit größerer Schichtdicke möglich. Durch das Glasfaservlies wird eine stabile Verankerung bzw. Verkettung der Adsorptionsmittelschicht mit der Metalloberfläche gewährleistet.

Die mechanische und thermische Stabilität der Adsorptionsmittelschicht hängt entscheidend vom Herstellverfahren ab. Je dünner die aufgetragene Schicht ist, um so haltbarer ist die Struktur. Werden dicke Schichten gefordert, so ist die Auftragung mehrerer dünner Schichten der Herstellung nur einer dicken Schicht vorzuziehen.

Erfindungsgemäß wird aus dem pulverförmigen Adsorptionsmittel durch Zugabe von Kleber und Wasser eine fließfähige Emulsion angerührt. Die Auftragung auf die metallische Oberfläche kann auf vielfältige Weise erfolgen. So haben sich insbesondere Tauch-, Streich- und Sprühmethoden bewährt. Je nach Fließfähigkeit der Emulsion entstehen bei den einzelnen Auftragsverfahren unterschiedlich dicke Schichten.

Ein Vortrocknen der noch flüssigen Schicht ist unerläßlich. Nur dadurch wird beim anschließenden Trocknen und Aushärten bei Temperaturen über 150 _{°} C eine haltbare Struktur erreicht.

Erfindungsgemäß können mehrere Schichten nacheinander aufgetragen werden. Hierbei ist jedoch sicherzustellen, daß die vorausgehende Schicht trocken und ausgehärtet ist. Danach ist die vorherige Schicht zu benetzen und so lange zu trocknen, bis die naß-glänzende Oberfläche matt wird. Erst dann darf die nächste Adsorptionsmittelschicht aufgetragen werden. Das anschließende Vortrocknen an Luft sowie das Endtrocknen und das Aushärten im Ofen erfolgen wie bei den Einzelschichten.

Im folgenden ist ein vorteilhaftes Beschichtungsverfahren dargestellt:
30 g eines handelsüblichen hochtemperaturbeständigen Bindemittels für keramische Produkte (z.B. Holts Gun Gum) wird mit 105 g Wasser verdünnt. In diese Emulsion werden unter Rühren 100 g eines vorher an Luft mit Wasserdampf gesättigten Na-A-Zeolith-Pulvers eingerührt. Da sich die Zeolith-Kristalle und der Kleber bei längerem Stehen entmischen können, ist bei der Weiterverarbeitung für eine gute Vermischung der Emulsion zu sorgen.

In die vorbereitete Mischung wird nun der zu beschichtende Wärmetauscher mit fett- und staubfreier Oberfläche kurz eingetaucht. Nach dem Entfernen des Wärmetauschers aus der Emulsion wird er an Luft bei Raumtemperatur vorgetrocknet und danach in einem Ofen bei Temperaturen über 150 _{°} C erhitzt. Dabei wird auch das im Zeolith-Hohlraum adsorbierte Wasser ausgedampft und der Kleber erhärtet.

Vor dem Auftragen der zweiten Schicht muß die erste Schicht zunächst mit Wasser durchnäßt werden. Dies erfolgt durch Tauchen in Wasser oder durch Aufsprühen von Wassertropfen. Danach ist darauf zu achten, daß vor dem nächsten Tauchvorgang die erste Beschichtungen so lange an Luft getrocknet wird, bis die naß-glänzende Oberfläche seidenmatt wird.

Erst jetzt darf eine zweite Schicht durch Eintauchen in die Emulsion aufgebracht werden. Danach schließt sich wiederum eine Vortrocknung an. Die Endtrocknung und die Aushärtung im Ofen erfolgen wie oben beschrieben.

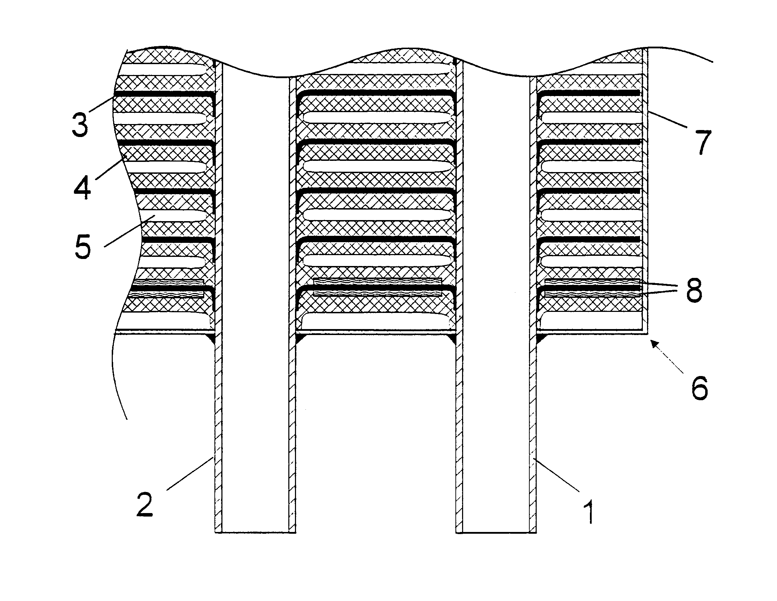

In der Zeichnung ist ein erfindungsgemäßes Ausführungsbeispiel einer Adsorptionsmittelschicht auf einem Lamellen-Wärmetauscher in geschnittener und gebrochener Darstellung gezeigt.

Die Figur zeigt einen Schnitt eines Rohr-Lamellenwärmetauschers mit zwei im Schnitt dargestellten Rohren 1 und 2, auf welche Aluminium-Lamellen 3 nach bekanntem Verfahren aufgezogen sind. Sowohl die Rohre 1, 2 als auch die Aluminium-Lamellen 3 sind mit einer erfindungsgemäßen Zeolithschicht 4 überzogen. Zwischen den beschichteten Aluminium-Lamellen 3 verbleiben Strömungskanäle 5 für den ungehinderten Zutritt von Arbeitsmitteldampf. Der beschichtete Rohr-Lamellenwärmetauscher ist in einem Gehäuse 6 eingebaut, dessen Wand 7 auf den Stirnseiten der Aluminium-Lamellen 3 abgestützt ist.

Ein Teil der Lamellen 3 wurde vor der Beschichtung mit einem Glasfaservlies 8 beklebt.

Zur Desorption von Arbeitsmitteldampf aus der Zeolithschicht 4 strömt durch das Rohr 1 ein heißes Medium, welches Wärme über die Aluminium-Lamellen 3 auf die Zeolithschicht 4 überträgt. Beim Erhitzen der Zeolithschicht wird Arbeitsmitteldampf ausgetrieben, welcher über die Strömungswege 5 zu einer nichtgezeichneten Dampfsenke strömen kann. Zur Abkühlung der Zeolithschicht 4 kann durch das Rohr 2 eine kältere Flüssigkeit strömen. Diese nimmt Wärme über die Aluminium-Lamellen 3 auf, so daß Arbeitsmitteldampf bei niedrigerem Druck aus einer Arbeitsmitteldampfquelle einströmen und adsorbiert werden kann.

## Patentansprüche

1. Adsorptionsmittelbeschichtung auf einer metallischen Fläche mit pulverförmigem, festem Adsorptionsmittel mit einem Korndurchmesser zwischen 1 und 50 um, welches durch feinverteiltes, erhärtetes Bindemittel mit einem Massenanteil von weniger als 50 Prozent, bezogen auf den Pulveranteil, verliebt ist, und bei der die Dicke der Beschichtung weniger als 4 mm beträgt und bei der die Adsorptionsgeschwindigkeit für Wasserdampf bei einem Dampfdruck von weniger als 20 mbar innerhalb von 30 Minuten zu einer Gewichtszunahme von mindestens 5 % (bezogen auf das Adsorptionsmittel) führt.

2. Adsorptionsmittelbeschichtungen nach Anspruch 1, dadurch gekennzeichnet, daß das Adsorptionsmittel synthetischen Zeolith enthält.

3. Adsorptionsmittelbeschichtung nach einem der vorangehenden Ansprüche, dadurch gekennzeichnet, daß das Bindemittel einen Hochtemperaturkleber für keramische Produkte auf Metalle enthält.

4. Adsorptionsmittelbeschichtung nach einem der vorangehenden Ansprüche, dadurch gekennzeichnet, daß die metallische Fläche Teil eines Wärmetauschers ist.

5. Adsorptionsmittelbeschichtung nach Anspruch 5, dadurch gekennzeichnet, daß der Wärmetauscher ein Lamellen-Wärmetauscher ist.

6. Adsorptionsmittelbeschichtung nach einem der vorangehenden Ansprüche, dadurch gekennzeichnet, daß zwischen der Metalloberfläche und der Adsorptionsmittelschicht eine Zwischenschicht aus Glasfaservlies aufgebracht ist.

7. Verfahren zur Herstellung von Adsorptionsmittelbeschichtungen nach einem der Ansprüche 1 bis 7, dadurch gekennzeichnet, daß
a) eine fließfähige Emulsion aus Bindemittel, Wasser und pulverförmigem Adsorptionsmittel hergestellt wird,
b) diese Emulsion auf die staub- und fettfreie Metalloberfläche mit einer Schicht von weniger als 1 mm aufgetragen wird,
c) der mit Emulsion benetzte Wärmetauscher an Luft vorgetrocknet wird und anschließend
d) eine Endtrocknung und Aushärtung des Bindemittels bei Lufttemperaturen von über 150 _{°} C erfolgt.

8. Verfahren zum Auftragen einer weiteren Adsorptionsmittelschicht im Anschluß an Verfahrensanpruch 7, dadurch gekennzeichnet, daß
e) vor dem erneuten Auftragen der fließfähigen Emulsion die zuvor ausgehärtete Beschichtung mit Wasser benetzt wird und anschließend an Luft getrocknet wird, bis eine seidenmatte Oberfläche sichtbar ist,
f) die Emulsion mit einer Schichtdicke von weniger als 1 mm aufgetragen wird,
g) die Beschichtung an Luft vorgetrocknet wird und
h) eine Endtrocknung und Aushärtung des Bindemittels bei Lufttemperaturen über 150 _{°} C erfolgt.
